# EUROPEAN PATENT APPLICATION

(11) **EP 2 745 913 A1**
(43) Date of publication of application: **25.06.2014**
(21) Application number: 13197188.9
(22) Date of filing: 13.12.2013
(51) Int. Cl.: B01D 53/26, F24H 8/00

(54) **Method and device for treatment of flue gases**

(30) Priority: 19.12.2012 SE 1200776
(71) Applicant: Ariterm Sweden AB, 39241 Kalmar (SE)
(72) Inventor: Wikström, Ulf, 386 95 Färjestaden (SE)
(74) Representative: Rosenquist, Per Olof

(57) **Abstract**

A device for cleaning of flue gases through condensation in small scale firing with fuel pellets having a substantially vertical glue gas cooler (12). The flue gas cooler (12) comprises an inner (4) and an outer (3) pipe, being substantially mutually concentric, arranged with a space (2) between them in a radial direction. In the space between the inner (4) and outer (3) pipe there is a helical pipe (5) for a flowing cooling medium. The flue gases are led through the space (2) between the inner (4) and outer (3) pipe for cooling and condensation.

A method for cleaning of flue gases in small-scale firing with fuel pellets comprising the steps of leading the flue gases into a space (2) between an inner (4) and outer (3) pipe, which are mutually substantially concentric and having a helical pipe (5) arranged in the space (2) between the inner (4) and outer (3) pipe, cooling of the flue gases to condensation, partly so that the condensate forms a liquid film or droplets on cooled surfaces (5), and partly so that the condensate forms droplets falling freely in the flue gases, whereupon the condensate water is collected and remaining flue gases are led out of the space (2) between the inner (5) and outer (3) pipe.

## Description

### TECHNICAL FIELD

The present invention relates to a device for the cleaning of flue gases through condensation in small-scale firing with fuel pellets.

The invention further relates to a method for the cleaning of flue gases in small-scale firing with fuel pellets.

### PRIOR ART

In residential districts with many central heaters using solid fuel, the content of solid particles in the fuel gas can present a major problem. Soot, coke and tar resulting from imperfect combustion and ash particles coming from the content of incombustible constituents in the fuel are responsible for this. When firing with fuel pellets as the fuel, it is easier to accomplish a combustion which is substantially soot free, in comparison with firing with wood, but it is difficult to influence the ash content of the flue gas using prior art technical measures for influencing the combustion.

Flue gas condensing devices available in the market do not have or have insufficient flue gas cleaning.

### THE PROBLEM

Thus, there is a desire of accomplishing a more efficient flue gas cleaning than the cleaning that so far is possible.

### PROBLEM SOLUTION

The object of the invention is achieved with the device according to the invention being characterized in that it comprises a substantially vertical flue gas cooler, comprising an inner and an outer pipe, said pipes being mutually concentric and being arranged with a mutual space in a radial direction and comprising a helical pipe arranged in the space between the inner and outer pipes for conducting of a cooling medium therein, wherein the flue gases are led through the spacing between the inner and the outer pipes for cooling and condensation purposes.

Further advantages are achieved when the device is further characterized by one or several of the features defined in the claims 2 - 7.

Regarding the method, the object is achieved when the method is characterized by the steps of conducting the flue gas into a space between an inner and an outer pipe, which are substantially mutually concentric and comprises a helical pipe arranged in the space between the inner and the outer pipe, cooling the flue gases to condensation, partly so that the condensate forms a liquid film or droplets on cooled surfaces, and partly so that the condensate forms droplets in the flue gas falling freely, whereupon the condensing water is collected and remaining flue gases are led out of the space between the inner and the outer pipes.

Further advantages are achieved if the method further comprises the one or several features defined in the claims 9 - 10.

### SHORT DESCRIPTION OF THE DRAWINGS

The invention will now be described with reference to the accompanying drawings, on which:
- Fig 1A: shows a vertical cross section through a device according to the invention;
- Fig 1B: shows a view corresponding to the view in Fig. 1A of a lower part of an alternative configuration of the device;
- Fig 2: shows a vertical cross section through the upper and lower parts of the device in a larger scale; and
- Fig 3: shows a cross sectional view, across the longitudinal direction of a sector of the device according to a preferred embodiment of the invention.

### THE PREFERRED EMBODIMENT

The method and the device for achieving flue gas condensation at pellet-firing and for separation of ashes from the flue gases are described below applied on a private house heater fired with pellets. Such a heater is intended for a heating system comprising water radiators, but the flue gas cleaner according to the invention can be used for other types of pellet fired, smaller heating systems.

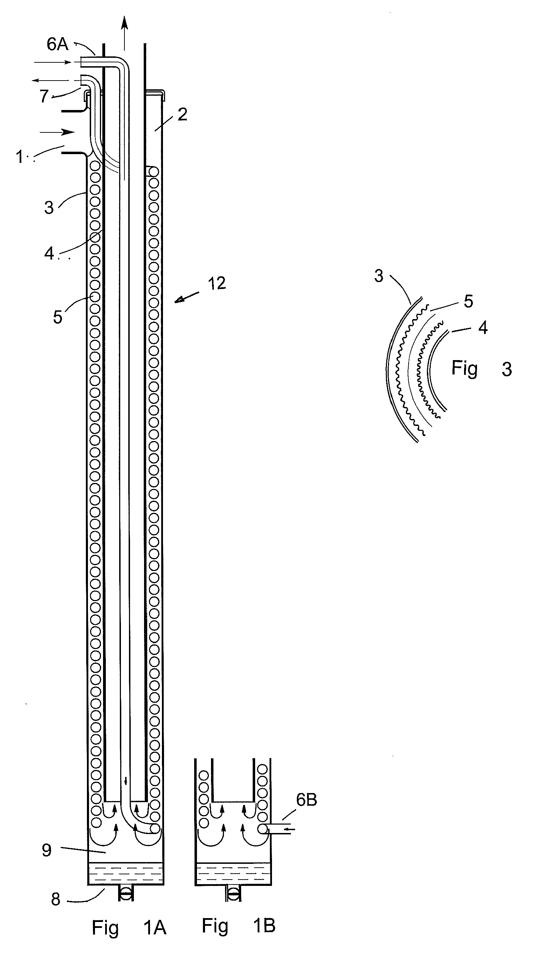

Fig. 1A shows a vertical cross section through a flue gas cooler 12 according to the invention. The flue gas cooler 12 has, at its upper end, a flue gas inlet 1 to a channel 2 directed downwards. The downward channel 2 is formed between an outer pipe 3 and an inner pipe 4. The downward channel 2 is thus substantially pipe shaped, i.e. it is limited inwards by the pipe 4 and outwards by the pipe 3, which according to the preferred embodiment are cylindrical with a substantially circular cross-section. However, within the frame of the inventive thought, it is also contemplated that both pipes 3, 4 can be modified. It is desired that the space between the two pipes is fairly symmetrical over the cross section of the channel, and that it is substantially the same over the entire length of the channel 2

The inner pipe 4 is ended at a distance from the bottom 8 of the outer pipe 3, so that a space 9 arises, where the flue gases turn upwards in a return passage through the inner pipe 4.

A helical pipe 5 is arranged in the channel 2 between the outer pipe 3 and the inner pipe 4 around the inner pipe 4 along the larger part of the channel 2. The helical pipe 5 is one part of a spirally wound cooling means 13. The flue gas is cooled and will eventually form condensate in contact with the cooling means 13. The cooling means 13 has an inlet 6A and an outlet 7 for a cooling medium. The inlet 6A of the cooling means is drawn down through the inner pipe 4, as is shown in Fig. 1A. Fig. 1B shows an alternative connection of the inlet 6B.

The outer pipe 3 of the flue gas channel is below formed with a space 10 for collection of the condensate water being polluted by the dust content of the flue gas. At the bottom of the space 10 for collection of condensate water there is a discharge valve 11. Alternatively, the condensate can be discharged continuously through a water trap, not shown in the drawing.

According to the preferred embodiment, the cooling medium flowing through the cooling means 13 is return water from the heating system of the house, which for example can be designed with radiators, convectors, or bottom flow heating coils, and with devices connected to the heating system for heating of hot water.

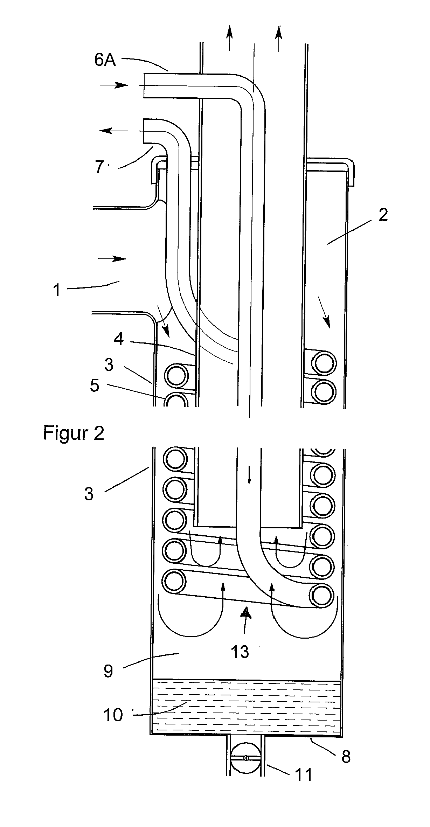

Fig. 2 shows the upper and lower parts of the device in a larger scale.

For cleaning flue gases from the combustion are led over a number of cooled, turbulence generating elements arranged successively in the flow direction of the gas, and according to the preferred embodiment of the invention these elements are the windings of the helical pipe 5, the surfaces of which are wet by the condensation of the flue gases. The condensate formed will bind and retain dust particles in the flue gases. The condensate water being polluted by the flue gases is collected in the space 10 and is discharged.

Normally the heat content of a fuel is specified with the so called "lower heating value", where the latent heat of the flue gases is disregarded, i.e. the heat of vaporization for the water formed during the combustion of the fuel. For pellets-fired private house heaters with flue gas temperatures of 150 - 200°C, an efficiency of about 90 % at the best can be achieved when firing with small air surpluses. If the heat of vaporization can be recovered by condensation of the steam in the flue gases, efficiencies above 100 % can be achieved, calculated as emitted heat in relation to heat fed in by the fuel, with the lower heating value as the base.

The dew point for the steam at the firing of solid fuel is about 55°C, which for condensation of the flue gases also demands an efficient flue gas cooler with access to a cooling medium at a low temperature. An especially efficient cooling of the flue gases is achieved in that the flue gases are led in a direction that is opposite to the flow direction of the cooling medium.

In the described embodiment, wherein the water returning from the heating system having a temperature of 35 - 40°C is used to cool the flue gases, a temperature well under the dew point is achieved. Older radiator systems are normally dimensioned for a considerably higher return temperature, but it is a known fact among men skilled in the art, that older radiator systems are highly oversized and work better with lower radiator flows with a larger temperature drop, i.e. lower return temperature. For new-built houses the radiator systems have since long been dimensioned for low water temperatures, which, as well as other low temperature systems, e.g. underfloor heating, give opportunities for a flue gas condenser according to the invention to get access to return water having a low temperature.

In the embodiment shown in the Figs. for a small private house heater and a flue gas temperature of about 200°C at the flue gas inlet 1 and with a water temperature of about 35°C at the inlet 6A, 6B, the flue gases have, after having passed 10 to 15 windings of the helical pipe 5 been cooled to their dew point, about 55°C, so that the remaining 30 to 35 windings of the helical pipe 5 work with condensation of the flue gases. On the first windings of the pipe with condensation a water film or small droplets will form on the helical pipe 5. Further down in the channel 2 there will be free-falling water droplets.

The flue gases flowing in through the inlet 1 are led downwards in the channel 2 and flows past the helical pipe 5 with a velocity and with a flow pattern being optimal for heat transfer and dust separation. The flow is characterized by a strong turbulence, so that the flue gases are mixed and the temperature reduction is substantially uniform. The flow will in principle be free from boundary layers, i.e. there will be no stationary layer adjacent to the walls of the channel 2, and neither will the cooling means 13 be surrounded by any stationary boundary layer of air or flue gases, and this will result in an efficient heat exchange with the cooling medium streaming through the cooling means 13. At the same time the pressure drop in the channel 2 will be acceptable.

As stated above, the flue gas flow around the pipe windings of the helical pipe 5 arranged after each other across the flow direction will be highly turbulent so that the dust in the flue gases are washed away when meeting with the wet surfaces of the helical pipe 5 and when flowing past the free-falling water droplets.

Practical tests have shown that favorable results are achieved when the water-cooled helical pipe 5 has an outer diameter taking up more than 40 % of the gap 2 between the outer pipe 3 and the inner pipe 4.

Fig. 3 shows a horizontal cross-section through a sector of the device, illustrating an especially advantageous embodiment of the helical pipe 5, wherein the pipe 5 has been manufactured from en thin-walled metal pipe having a wave form (a bellows pipe). This will give a larger surface in contact with the flue gases and thereby an enhanced heat exchange with the cooling medium. This will in turn give a quicker condensation and an efficient separation of the dust in the flue gases. Furthermore, the bending will become easier with a small bending radius. The surface structure also has a better turbulence generating effect on the flue gases compared to a completely smooth surface.

The invention can be further modified within the frame of the appended claims.

## Claims

1. A device for cleaning of flue gases through condensation in small-scale firing with fuel pellets, **characterized in that** the device has a substantially vertical flue gas cooler (12), comprising an inner (4) and outer (3) pipe being substantially mutually concentric and arranged with a space (2) between them in a radial direction and a helical pipe (5) arranged in the space between the inner (4) and outer (3) pipe for conducting of a cooling medium, wherein the flue gases are led through the space (2) between the inner (4) and outer (3) pipes for cooling and condensation.

2. The device according to claim 1, **characterized in that** a space (10) for collection of condensate water is arranged at the lower end of the outer pipe (3).

3. The device according to claim 1 or claim 2, **characterized in that** a flue gas inlet (1) to the space (2) between the pipes (3, 4) is arranged at the upper end of the outer pipe (3), an outlet is arranged at the upper end of the inner pipe (4) and **in that** the space (2) between the pipes (3, 4) is connected to the lower end of the inner pipe (4), so that a passage for flue gases is obtained there between.

4. The device according to any of the claims 1 to 3, **characterized in that** the helical pipe (5) has an inlet (6A, 6B) for the cooling medium at its lower end and an outlet (7) at its upper end.

5. The device according to claim 4, **characterized in that** a connection to the inlet (6A) of the helical pipe (5) extends through the inner (4) and outer (3) pipe.

6. The device according to any of the claims 1 to 5, **characterized in that** the helical pipe (5) has a surface structure which enlarges its surface towards the surroundings.

7. The device according to claim 6, **characterized in that** the helical pipe (5) has a pleated surface.

8. A method for cleaning of flue gases in small-scale firing with fuel pellets, **characterized by** the steps of leading the flue gases into a space (2) between an inner (4) and an outer (3) pipe, being mutually substantially concentric and having a helical pipe (5) arranged in the space between the inner (4) and outer (3) pipe, cooling of the flue gases to condensation, partly so that the condensate forms a liquid film or droplets on cooled surfaces of the helical pipe (5), and partly so that the condensate forms droplets falling freely in the flue gases, whereupon the condensate water is collected and remaining flue gases are led out of the space (2) between the inner (4) and outer (3) pipe.

9. The method according to claim 8, **characterized in** the step of providing the helical pipe (5) in the space (2) with a cooling medium flowing in a direction opposite to the flow direction of the flue gases.

10. The method according to claim 9, **characterized in that** the cooling medium is taken from the return conduits of a system for waterborne heat.
